# EUROPEAN PATENT APPLICATION

(11) **EP 0 790 172 A2**
(43) Date of publication of application: **20.08.1997**
(21) Application number: 97300858.4
(22) Date of filing: 11.02.1997
(51) Int. Cl.: B62J 1/04

(54) **Suspension unit for a bicycle**

(30) Priority: 14.02.1996 GB 9603019; 31.05.1996 GB 9611377
(71) Applicant: Messenger, Michael Douglas, London SW3 3DW (GB)
(72) Inventor: Messenger, Michael Douglas, London SW3 3DW (GB)
(74) Representative: Prentice, Raymond Roy

(57) **Abstract**

A suspension unit or shock absorbing unit for a bicycle is adapted to be fitted to or to replace the seat stem or saddle tube extending from the down tube of a cycle frame to the saddle. The unit comprises an upper member comprising an arm (13) and a cup-shaped end (15), a lower member comprising an arm (15) and a cup-shaped end (16), a pivot pin (17) pivotally connecting the arms together and a resilient member in the form of a ball (11) housed in the cup-shaped ends of the upper and lower members. A shaft (12) extends through the centre of the ball (11) and has a different density and hardness from that of the ball but may also be made of resilient material. The lower member can be fitted into the seat stem or saddle tube (22) by means of a screw or bolt (48) which extends through a bore (46) in the cup-shaped end (16) of the lower member, through a tubular member (51) and engages in a screw-threaded bore in a rod-like member (53). The tubular member (51) and rod-like member (53) have inclined facing ends (52, 54) which when engaged with one another cause the tubular member to be displaced laterally with respect to the rod-like member when the screw or bolt is tightened whereby the tubular member and rod-like member can engage the inner wall of the seat stem or saddle tube to secure the unit in position. The cup-shaped end (15) of the upper member carries a saddle supporting member (49).

## Description

This invention relates to bicycles and is particularly concerned with a suspension unit or shock absorbing device for a bicycle.

The major disadvantage of a conventional bicycle is that shocks from bumps on a road or other surface are transmitted directly to the rider and, after a time, these shocks become uncomfortable particularly if the bicycle is being ridden over a rough surface. The present invention aims to overcome this disadvantage.

According to the invention, there is provided a suspension unit or shock absorbing unit for a bicycle or the like in which said suspension unit or shock absorbing unit is adapted to be fitted to or to replace a seat stem extending from the down tube of a cycle frame to the saddle of a bicycle or the like and comprises a resilient member which is adapted to be housed between a lower member which is adapted to be connected to the down tube of a cycle frame or to a seat stem or saddle tube and an upper member which is adapted to be connected to a saddle, the resilient member taking the form of a ball with a shaft of resilient material extending through it, the resilient material of the shaft preferably having a different density and hardness from that of the ball.

The unit may be substantially spherical and, together with said upper and lower members, may replace the seat stem or saddle tube of a conventional bicycle. Alternatively, the unit can be fitted to the upper end of the seat stem or saddle tube of a bicycle as well as to a saddle.

The upper and lower members are desirably pivotally connected together by a lever mechanism.

The invention also extends to a bicycle or other vehicle fitted with a suspension unit or shock absorbing unit as above described.

The invention will now be described in detail, by way of example, with reference to the drawings, in which:-
Fig. 1 is a perspective view of one embodiment of a suspension or shock absorbing unit for a bicycle according to the invention;
Fig. 2 is a side elevation of a bicycle fitted with the suspension or shock absorbing unit shown in Fig. 1;
Fig. 3 is a side elevation, to an enlarged scale, of the unit shown in Figs. 1 and 2;
Fig. 4 is a front view of the unit shown in Fig. 3;
Fig. 5 is a rear view of the unit shown in Fig. 3;
Fig. 6 is a view, corresponding to Fig. 3, but showing the unit in a compressed state;
Fig. 7 is a view, corresponding to Fig. 4, but showing the unit in said compressed state;
Fig. 8 is a view, corresponding to Fig. 5, but again showing the unit in the compressed state;
Fig. 9 is a section taken on the line IX-IX in Fig. 3, in the direction of the arrows;
Fig. 10 is a section, corresponding to Fig. 9, but showing the unit in a compressed state;
Fig. 11 is a section taken on the line XI-XI in Fig. 4, in the direction of the arrows;
Fig. 12 is a section, corresponding to Fig. 10, but showing the unit in the compressed state.
Fig. 13 is a side elevation of a modified form of embodiment of a suspension or shock absorbing unit according to the invention;
Fig. 14 is a front view of the unit shown in Fig. 13;
Fig. 15 is a vertical section taken on the line XV-XV in Fig. 14;
Fig. 16 is an exploded perspective view of part of the embodiment shown in Figs. 13-15; and
Fig. 17 is a vertical section through yet another embodiment of a suspension or shock absorbing unit according to the invention.

In the drawings, like parts are denoted by like reference numerals.

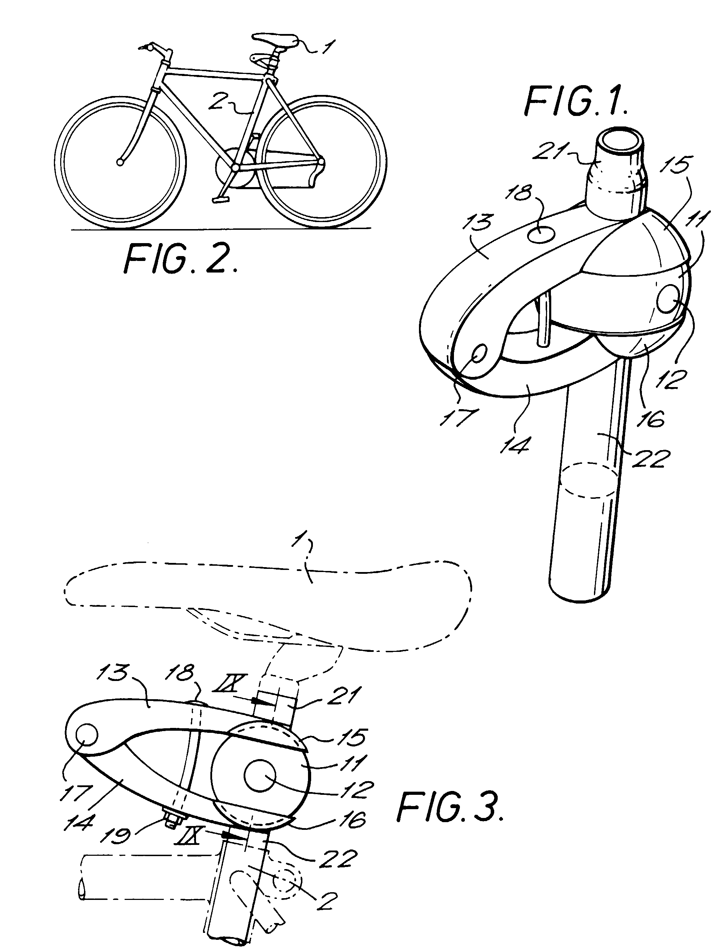

Referring to the drawings, a suspension or shock absorbing unit according to the invention is essentially designed to replace the seat stem of a conventional bicycle and extends between the saddle 1 and down tube 2 of a bicycle as shown in Fig. 2. The unit comprises a spherical member 11 which is held between a pair of arms 13 and 14 having, respectively, cup-shaped ends 15 and 16 which are arranged to grip opposite sides of the spherical member 11. The two arms 13, 14 are pivotally connected to each other by a pivot pin 17 and a curved bolt 18 extends through bores in both of the arms 13 and 14 and is secured in place by a nut 19 which engages a screw-thread at the end region of the bolt 18.

A saddle-supporting stem 21 extends upwardly from the cup-shaped end 15 of the arm 13, to which it is secured, and is adapted to receive a saddle 1 in a known manner. A down-tube stem 22 extends downwardly from the cup-shaped end 16 of the arm 14, to which it is likewise secured, and is receivable in a down tube 2 of a bicycle in which it is secured again in a known manner.

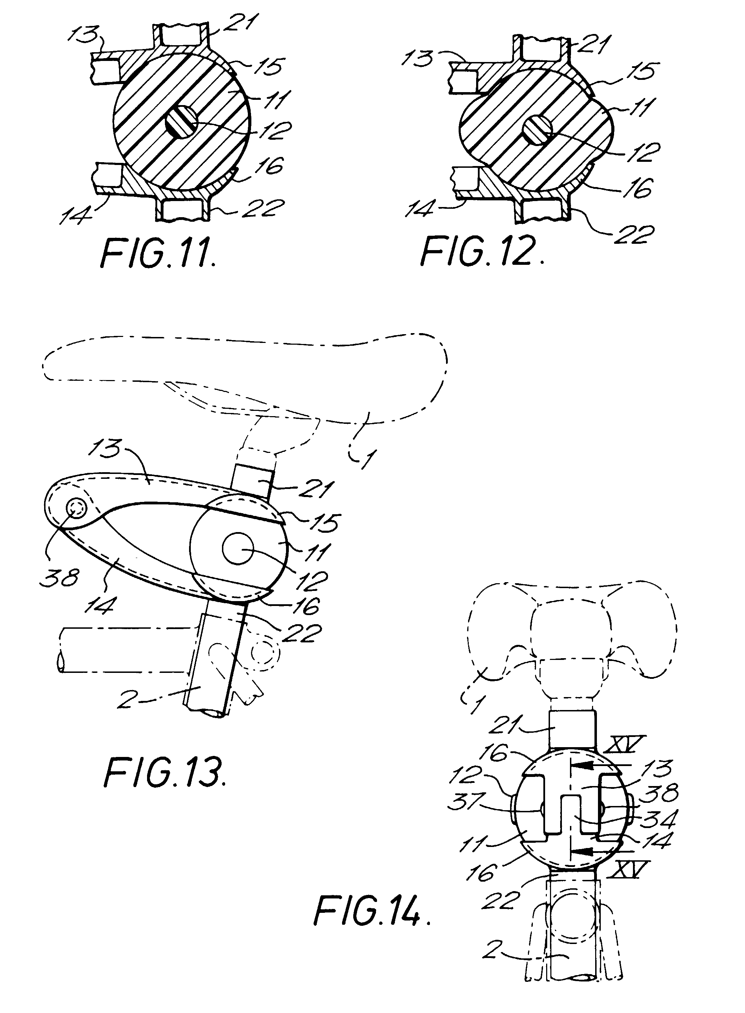

The spherical member 11 takes the form of a ball of resilient material with a shaft 12 extending horizontally through it as shown in Figs. 9 and 11 of the drawings. The shaft is desirably also made of a resilient material but preferably is of greater density and hardness than the ball 11.

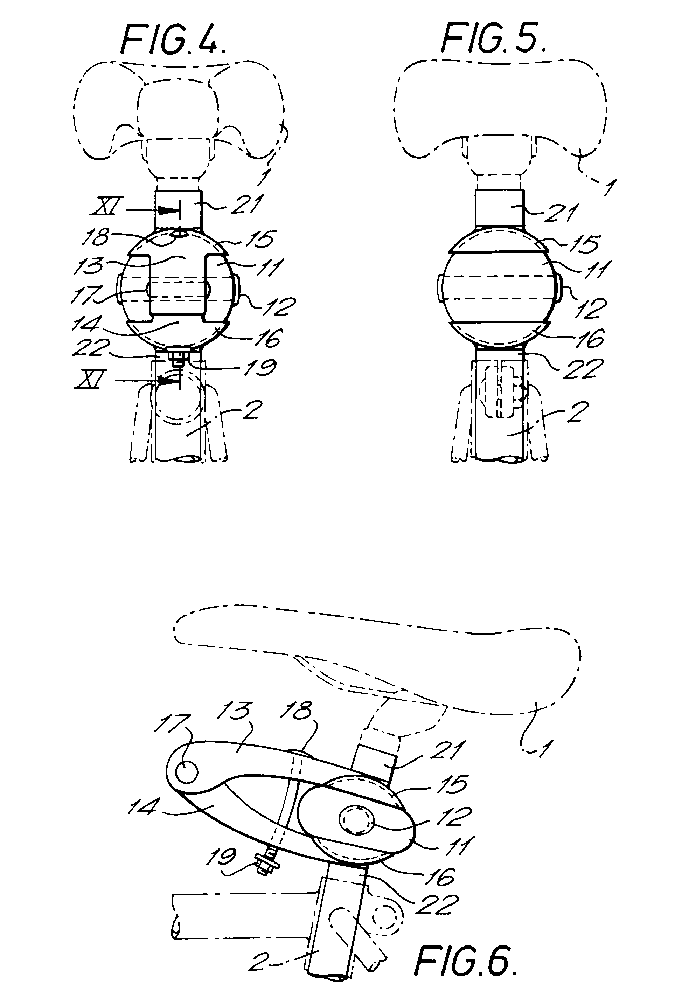

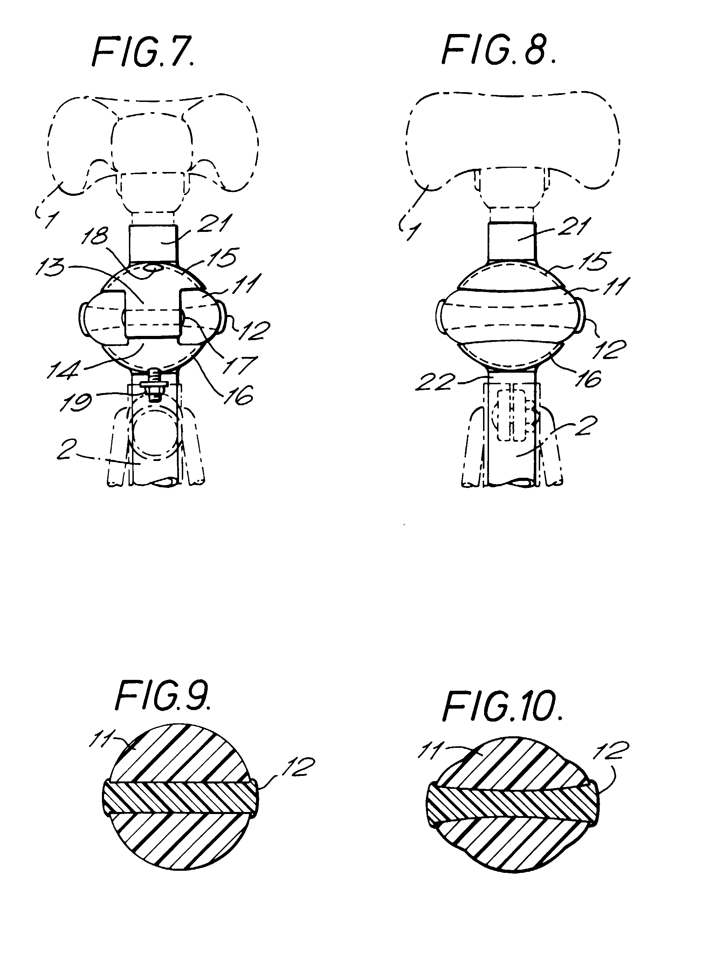

In use, when a bicycle fitted with the unit is being ridden, shocks transmitted from the road or other surface will be absorbed by the ball 11 which will be deformed as shown in Figs. 6-8, 10 and 12. The curved bolt 18 acts as a retainer to prevent the ball 11 from leaving the cup-shaped ends 15, 16 of the arms 13, 14 on rebound. The bolt also serves to adjust initial compression of the ball 11 during assembly.

In the embodiment shown in Figs. 13-16, the curved bolt 18 is replaced by a coupling which comprises a tongue 34 extending from the lower arm 14 and engaging in a recess 33 in the upper arm 13. The two arms are pivotally connected by a pivot bolt assembly comprising a male bolt 37 and a female bolt 38, the latter engaging in aligned bores 35, 36 in the upper and lower arms 13 and 14 respectively. The end of the tongue 34 is urged to abut against the base of the recess 33 when the ball 11 rebounds and thus acts as a retainer in a similar manner to the curved bolt 18.

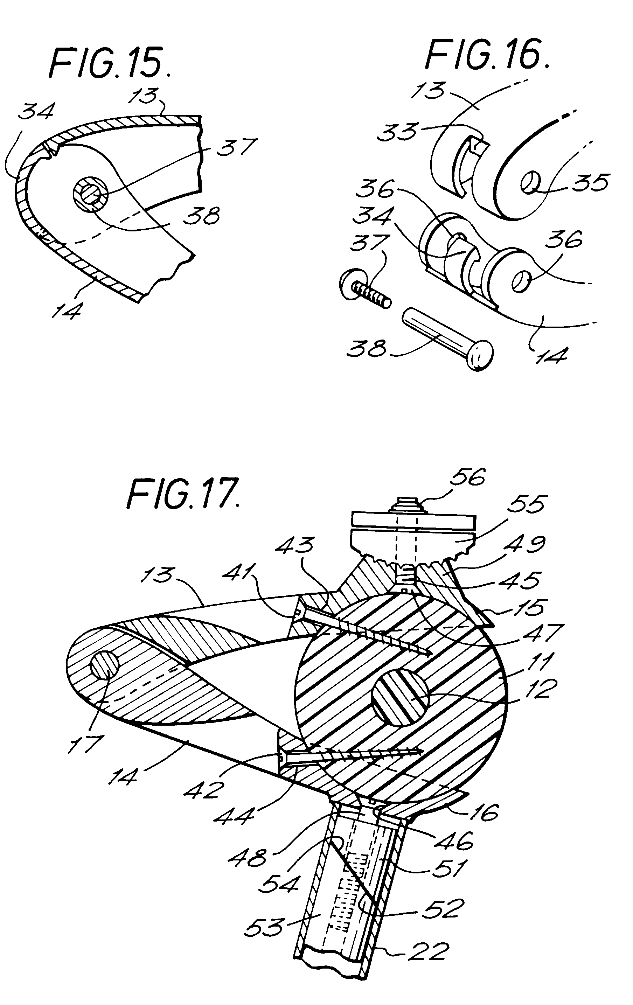

Fig. 17 shows another embodiment in which the spherical member 11 is retained in the cup-shaped ends 15 and 16 of the arms 13 and 14 by means of screws 41 and 42 which pass through respective bores 43 and 44 in the arms 13 and 14 and engage with the spherical member 11. The screws are a fairly loose fit in the respective bores to allow relative movement to take place between the screws 41, 42, which move with compression and expansion of the spherical member 11, and the cup-shaped ends 15, 16 of the arms 13, 14. It is not essential to use screws and the spherical member 11 may be secured in the cup-shaped ends 15 and 16 by other suitable fastening elements. This arrangement provides a simpler assembly and gives a neater appearance than the other embodiments described above.

Fig. 17 also shows alternative methods of fitting a suspension or shock absorbing unit according to the invention to a bicycle. Because not all bicycles have down tubes of the same diameter, it is necessary to provide a range of seat stems or saddle tubes to fit into down tubes of differing sizes. The embodiment shown in Fig. 17 aims to solve the problem of providing a unit according to the invention with such a range of seat stems or saddle tubes. As shown in Fig. 17, the base of the cup-shaped end 16 is provided with a bore 46 through which a screw or bolt 48 is passed before the ball 11 has been fitted. The screw or bolt 48 passes through a hollow tubular member 51 and engages in a screw-threaded bore in a second rod-like member 53. The facing ends of the tubular member 51 and the rod-like member 53 have inclined surfaces 52 and 54 respectively whereby tightening of the screw or bolt 48 will cause the tubular member 51 to be moved laterally with respect to the rod-like member 53 so that the sides of both members can grip the inner surface of a seat stem or saddle tube 22 and hold the unit in place.

The cup-shaped end 15 is provided with a bore 45 through which a screw or bolt 47 is passed before the ball 11 is fitted. A saddle-supporting member 49 is fitted to the cup-shaped end 15 and is provided with a serrated upper edge for engagement with a serrated edge on a saddle supporting member 55 to enable the angle of the saddle to be adjusted. The screw or bolt 47 passes through the members 49 and 55 and is engaged with a nut 56 which is secured to the saddle (not shown).

In order to fit the unit to a bicycle, the unit is first secured by means of the screw or bolt 47 to a saddle. The members 51 and 53 are then inserted into the seat stem or saddle tube 22 and the screw or bolt 48 turned until the members 51 and 53 engage the inner surfaces of the seat stem or tube 22 by lateral movement of the tubular member 51 as its surface 52 slides over the surface 54 of the rod-like member 53. The ball 11 is then placed in the cup-shaped end 16 and the arm 13 carrying the saddle is pivoted around the pivot pin 17 until the cup-shaped end 15 engages the upper part of the ball 11. The ball is then secured in place in the cup-shaped ends 15 and 16 by the respective screws or other fastening elements 41 and 42. The assembly is then complete.

The ball 11 and shaft 12 may be made of any suitable resilient material but natural or synthetic rubber or plastics are preferred. The shaft 12 may be moulded in the ball 11 during manufacture but it is preferred to provide the ball 11 with a bore in which a replaceable shaft 12 can be inserted. Shafts of different densities and hardness can then be chosen for particular applications. It is envisaged that the ball will have an uncompressed diameter of between approximately 50 and 70 mm.

The arms 13, 14, cup-shaped ends 15, 16 and stems 21, 22 may be made of aluminium or aluminium alloy although other materials such as steel or carbon fibres may be used if desired.

The invention is not restricted to the above-described embodiments but variations and modifications may be made without departing from the scope of the invention. Further, the invention is not restricted to bicycles since a unit according to the invention could also be incorporated in or replace the seat stem of a tricycle or one or both seat stems of a tandem cycle.

## Claims

1. A suspension unit or shock absorbing unit for a bicycle or the like in which said suspension unit or shock absorbing unit is adapted to be fitted to or to replace a seat stem or saddle tube extending from the down tube (2) of a cycle frame to the saddle (1) of a bicycle or the like and comprises a resilient member (11) which is adapted to be housed between a lower member (16) which is adapted to be connected to the down tube (2) of a cycle frame or to a seat stem or saddle tube (22) and an upper member (15) which is adapted to be connected to a saddle, characterised in that the resilient member takes the form of a ball (11) with a shaft (12) of resilient material extending through it.

2. A unit according to claim 1, characterised in that the resilient material of the shaft (12) has a different density and hardness from that of the ball (11).

3. A unit according to claim 1 or claim 2, characterised in that the ball (11) is provided with a bore adapted to receive the shaft (12) in a replaceable manner.

4. A unit according to any one of the preceding claims, characterised in that the upper and lower members are pivotally connected together by a lever mechanism comprising a first arm (13) extending from the upper member (15) and a second arm (14) extending from the lower member (16), the two arms being pivotally connected together at a location remote from said upper and lower members.

5. A unit according to claim 4, characterised in that means are provided for limiting the extent of pivotal movement between the arms and hence between the upper and lower members.

6. A unit according to any one of the preceding claims, characterised in that the upper and lower members are cup-shaped and each is adapted to receive and retain a respective portion of the resilient member.

7. A unit according to any one of the preceding claims, characterised in that the resilient member is retained in the upper and lower members by screws (41, 42) passing through bores (43, 44) in the said upper and lower members and engaging in the resilient member.

8. A unit according to any one of the preceding claims, characterised in that the lower member is adapted to replace the seat stem or saddle tube of a conventional cycle.

9. A unit according to any one of claims 1 to 7, characterised in that the lower member is adapted to be fitted to the upper end of the seat stem or saddle tube of a cycle and in that the lower member (16) is provided with a bore (46) through which a screw or bolt (48) extends, said screw or bolt passing through a tube-like member (51) and being engaged in a screw-threaded bore in a rod-like member (53), said tube-like member and rod-like member being receivable in the seat stem or saddle tube (22) of a cycle and being provided with inclined facing ends (52, 54) which are engageable with one another, whereby turning the screw or bolt (48) when said facing ends are engaged is effective to cause the tube-like member (51) to move laterally with respect to the rod-like member (53).

10. A unit according to any one of the preceding claims, wherein a saddle-supporting member (49) is secured to the upper member (15).
